# EUROPEAN PATENT SPECIFICATION

(11) **EP 2 370 536 B1**
(45) Date of publication and mention of the grant of the patent: **06.11.2013**
(21) Application number: 09837826.8
(22) Date of filing: 08.12.2009
(51) Int. Cl.: C09D 183/02, C08F 265/04, C08F 290/06, C08F 220/24, C08F 220/28, C08F 230/08, C09D 183/06, C09D 151/00, C09D 133/14, C09D 143/04

(54) **COATING COMPOSITION**
BESCHICHTUNGSZUSAMMENSETZUNG
COMPOSITION DE REVÊTEMENT

(30) Priority: 18.12.2008 US 138677 P
(43) Date of publication of application: 05.10.2011
(73) Proprietor: 3M Innovative Properties Company, Saint Paul, MN 55133-3427 (US)
(72) Inventor: QIU, Zai-Ming, Saint Paul, Minnesota 55133-3427 (US); HAO, Encai, Saint Paul, Minnesota 55133-3427 (US)
(74) Representative: Isarpatent
(86) International application number: PCT/US2009/067061
(87) International publication number: WO 2010/080288

(56) References cited:
- EP-A1- 2 357 214
- WO-A1-2008/039680
- WO-A2-01/83624
- US-A1- 2004 068 036
- US-A1- 2005 137 355
- US-B1- 6 593 417

## Description

### Field of the Disclosure

The present disclosure relates to coating compositions and hardcoats prepared from the coating compositions.

### Background

A wide variety of coating compositions are used to modify the properties of substrate surfaces. Hardcoats are one example of such coating compositions. Hardcoats have been used to protect a wide range of surfaces. Some of these hardcoats are optically clear allowing the user to see through the coating. Hardcoats typically contain inorganic oxide particles, e.g., silica, of nanometer dimensions dispersed in a binder precursor resin matrix, and sometimes are referred to as "ceramers".

Fluorinated materials have been incorporated into hardcoats to reduce the surface energy rendering the surface ink repellent and/or easy to clean.

WO 2008/039680 A1 discloses fluoroacrylate additives and hardcoat compositions including the same, wherein the hardcoats are useful as a hardcoat layer on protective films or optical displays.

EP 2357214 A1 describes coatings for substrates comprising a fluorinated acrylate random copolymer, wherein in the random copolymer also silane-containing units can be comprised.

US 2005/137355 A1 refers to coating compositions including an amino resin and a reactive fluorinated copolymer, wherein the reactive fluorinated copolymer can include hydrolysable silane units in addition to perfluoropolyether units.

The coating composition disclosed in WO 01/83624 A2 includes a coating composition for siliceous surfaces. The coating includes at least one component from the group consisting of poly(alkoxy)silane, poly(halo)silane, alkoxysilane, halosilane, and mixtures thereof and a catalyst compound which generates a proton to hydrolyze the component when exposed to radiation.

US 6593417 B1 relates to coating compositions which are formed from components comprising (a) at least one polysiloxane comprising at least one reactive functional group; (b) at least one reactant comprising at least one functional group that is reactive with at least one functional group selected from the at least one reactive functional group of the at least one polysiloxane and at least one functional group of at least one reactant; and (c) a plurality of particles, wherein each component is different, and wherein the at least one reactive functional group of the at least one polysiloxane and the at least one functional group of the at least one reactant are substantially nonreactive with the particles.

US 2004//068036 A1 discloses emissive coatings for flexible substrates, preferably elastomers or elastomers bonded to metal. The coating composition is formed by combining parts (a) and (b) where part (a) comprises an organic solution or aqueous dispersion of a functional group containing polymer or copolymer and thermal conductive filler; and part (b) comprises a liquid curing component, for example a poly isocyanate, a carbodiimide, or an amino resin. The coating compounds can be applied to an substrate either before or after the substrate has been vulcanized. The coatings can be cured at ambient temperatures and provide heat dissipation over long term service at elevated temperatures.

### Summary

Compositions useful for preparing coatings are disclosed. The compositions comprise a copolymer prepared from a reaction mixture comprising an ethylenically unsaturated hydrolysable silane, an ethylenically unsaturated polyoxyalkylene, an ethylenically unsaturated fluorinated polyether and an initiator. In some embodiments the composition further comprises a curable sol-gel dispersion.

Also disclosed are coatings comprising a curable sol-gel dispersion, and a copolymer prepared from a reaction mixture comprising an ethylenically unsaturated hydrolysable silane, an ethylenically unsaturated polyoxyalkylene, an ethylenically unsaturated fluorinated polyether and an initiator. In some embodiments the coatings are cured.

Also disclosed are articles comprising a substrate, and a cured coating on at least one surface of the substrate, wherein the cured coating comprises a cured composition comprising a curable sol-gel dispersion, and a copolymer prepared from a reaction mixture comprising an ethylenically unsaturated hydrolysable silane, an ethylenically unsaturated polyoxyalkylene, an ethylenically unsaturated fluorinated polyether and an initiator.

Methods for coating a substrate are also disclosed. The methods comprise
providing a substrate, providing a curable coating composition comprising a curable sol-gel dispersion and a copolymer prepared from a reaction mixture comprising an ethylenically unsaturated hydrolysable silane, an ethylenically unsaturated polyoxyalkylene, an ethylenically unsaturated fluorinated polyether and an initiator, coating the coating composition on at least a portion of the substrate, and curing the coating.

The coated substrates disclosed not only provide low surface energy for easy cleaning, but also have low lint attraction.

### Detailed Description

The present disclosure provides coating compositions which may be used to form coatings on substrates. These coatings may have a variety of desirable properties including, for example, optical clarity, easy cleaning, lint repellency, scratch resistance, ink resistance, soil resistance and the like. The addition of fluorinated materials to hardcoat compositions can significantly reduce their surface energy providing ink and/or soil resistance, but may disadvantageously provide increased attraction to lint. Therefore, there is a need for coatings, such as fluorochemical coatings, which provide low surface energy hardcoats and yet do not increase the tendency to attract lint. Coating compositions of the present disclosure provide such a balance of ink resistance and lint resistance. Additionally, the addition of the fluorinated materials to the hardcoat compositions does not substantially affect the hardness of the hardcoat.

In some embodiments the coating compositions comprise a copolymer prepared from a reaction mixture comprising an ethylenically unsaturated hydrolysable silane, an ethylenically unsaturated polyoxyalkylene, an ethylenically unsaturated fluorinated polyether and an initiator. In other embodiments the coating compositions are curable coating compositions which are curable to form, for example, hardcoats. These curable coating compositions may comprise a curable sol-gel dispersion as well as a copolymer prepared from a reaction mixture comprising an ethylenically unsaturated hydrolysable silane, an ethylenically unsaturated polyoxyalkylene, an ethylenically unsaturated fluorinated polyether and an initiator.

The terms "a", "an", and "the" are used interchangeably with "at least one" to mean one or more of the elements being described.

The term "ethylenically unsaturated" refers to a reactive group which contains a terminal carbon-carbon double bond which is able to be polymerized via a free radical polymerization mechanism. Examples of ethylenically unsaturated groups include, for example, vinyl groups and (meth)acrylate groups.

The term "alkyl" refers to a monovalent group that is a radical of an alkane, which is a saturated hydrocarbon. The alkyl can be linear, branched, cyclic, or combinations thereof and typically has 1 to 20 carbon atoms. In some embodiments, the alkyl group contains 1 to 50, 1 to 18, 1 to 12, 1 to 10, 1 to 8, 1 to 6, or 1 to 4 carbon atoms. Examples of alkyl groups include, but are not limited to, methyl, ethyl, n-propyl, isopropyl, n-butyl, isobutyl, tert-butyl (t-butyl), n-pentyl, n-hexyl, cyclohexyl, n-heptyl, n-octyl, and ethylhexyl.

The term "heteroalkyl" refers to an alkyl group which contains heteroatoms. These heteroatoms may be halogens such as fluorine, chlorine, bromine, or iodine or other atoms such as nitrogen, oxygen or sulfur. An example of a heteroalkyl group is a polyoxyalkyl group such as -CH₂CH₂(OCH₂CH₂)ₙOCH₃.

The term "substituted alkyl" refers to an alkyl group which contains substituents along the hydrocarbon backbone. These substituents may be alkyl groups, heteroalkyl groups or aryl groups. An example of a substituted alkyl group is a benzyl group.

The term "aryl" refers to an aromatic carbocyclic group that is a radical containing 1 to 5 rings which may be connected or fused. The aryl group may be substituted with alkyl or heteroalkyl groups. An example of an aryl group is a phenyl group.

The term "alkylene" refers to a divalent group that is a radical of an alkane. The alkylene can be straight-chained, branched, cyclic, or combinations thereof. The alkylene often has 1 to 20 carbon atoms. In some embodiments, the alkylene contains 1 to 18, 1 to 12, 1 to 10, 1 to 8, 1 to 6, or 1 to 4 carbon atoms. The radical centers of the alkylene can be on the same carbon atom (i.e., an alkylidene) or on different carbon atoms.

The term "heteroalkylene" refers to a divalent group that includes at least two alkylene groups connected by a thio, oxy, or -NR- where R is alkyl. The heteroalkylene can be linear, branched, cyclic, substituted with alkyl groups, or combinations thereof. Some heteroalkylenes are poloxyyalkylenes where the heteroatom is oxygen such as for example, -CH₂CH₂(OCH₂CH₂)ₙOCH₂CH₂-. The term "polyether" is used synonymously with the term polyoxyalkylene.

The term "arylene" refers to a divalent group that is carbocyclic and aromatic. The group has one to five rings that are connected, fused, or combinations thereof. The other rings can be aromatic, non-aromatic, or combinations thereof. In some embodiments, the arylene group has up to 5 rings, up to 4 rings, up to 3 rings, up to 2 rings, or one aromatic ring. For example, the arylene group can be phenylene.

The term "heteroarylene" refers to a divalent group that is carbocyclic and aromatic and contains heteroatoms such as sulfur, oxygen, nitrogen or halogens such as fluorine, chlorine, bromine or iodine.

The term "aralkylene" refers to a divalent group of formula -R^{a}-Ar^{a}- where R^{a} is an alkylene and Ar^{a} is an arylene (i.e., an alkylene is bonded to an arylene).

The term "alkoxy" refers to a groups of the formula -OR, where R is alkyl, aryl, or substituted alkyl group.

The term "(meth)acrylate" refers to monomeric acrylic or methacrylic esters of alcohols. Acrylate and methacrylate monomers are referred to collectively herein as "(meth)acrylate" monomers.

The term "(meth)acrylate group" refers to the general structure H₂C=CHR-C(O)O-where C(O) refers to a carbonyl group, namely C=O and R is H (for acrylate groups) and methyl (for methacrylate groups).

Unless otherwise indicated, "optically clear" refers to a coating or article that has a high light transmittance over at least a portion of the visible light spectrum (about 400 to about 700 nanometers), and that exhibits low haze.

The terms "polymer" and "polymeric material" refer to both materials prepared from one monomer such as a homopolymer or to materials prepared from two or more monomers such as a copolymer, terpolymer, or the like. Likewise, the term "polymerize" refers to the process of making a polymeric material that can be a homopolymer, copolymer, terpolymer, or the like. The terms "copolymer" and "copolymeric material" refer to a polymeric material prepared from at least two monomers.

The terms "room temperature" and "ambient temperature" are used interchangeably to mean temperatures in the range of 20 °C to 25 °C.

The term "fluorinated" when used in conjunction with an alkyl, alkylene or polyether group refers to having at least one hydrogen atom replaced with a fluorine atom. The term "highly fluorinated" refers to where nearly all of the hydrogen atoms have been replaced with fluorine atoms. The term "perfluorinated" refers to where all of the hydrogen atoms are replaced by fluorine atoms. For example, the term "fluorinated polyether" refers to an oxyalkylene having at least one hydrogen atom replaced with a fluorine atom. Where nearly all of the hydrogen atoms are replaced with fluorine atoms the group is referred to as "highly fluorinated polyether". Where all of the hydrogen atoms are replaced with fluorine atoms the group is referred to as "perfluoro polyether".

The term "HFPO-" refers to the end group F(CF(CF₃)CF₂O)ᵤCF(CF₃)- of the methyl ester F(CF(CF₃)CF₂O)ᵤCF(CF₃)C(O)OCH₃, wherein "u" averages from 1 to 50, which can be prepared from the oligomerization of hexafluoropropene oxide, according to the method disclosed in U.S. Patent No. 3,250,808 (Moore et al.), with purification by fractional distillation, wherein the recitation of numerical ranges by endpoints includes all numbers subsumed within the range (e.g., the range 1 to 50 includes 1, 1.5, 3.33, and 50).

The term "hydrolysable silane" refers to a component which contains a group of the structure -SiY¹Y²Y³ where at least one of Y¹, Y² and Y³ are hydrolysable, i.e. that will undergo an exchange reaction with water to form a Si-OH moiety, which may further react to form siloxane linkages (Si-O-Si). Specific examples of hydrolysable groups include methoxy, ethoxy and propoxy groups, chlorine groups, and acetoxy groups.

The term "cured" means dried (e.g., through the evaporation of water or organic solvent at ambient or elevated temperature), crosslinked or a combination thereof.

The term "hardcoat" or "hardcoat layer" means a layer or coating that is located on a surface, for example, the external surface of an object, where the layer or coating has been designed to at least protect the object from abrasion.

The coating compositions of this disclosure comprise a copolymer prepared from a reaction mixture comprising an ethylenically unsaturated hydrolysable silane, an ethylenically unsaturated polyoxyalkylene, an ethylenically unsaturated fluorinated polyether and an initiator.

Any suitable ethylenically unsaturated hydrolysable silane may be used to prepare the coating compositions. Such monomers contain a terminal ethylenically unsaturated group and a terminal hydrolysable silane group and may be described by the general formula:

X-L₁-SiY¹Y²Y³ Formula 1

wherein
X comprises an ethylenically unsaturated group;
L₁ is a single covalent bond or a divalent linking group; and
each of Y¹, Y², and Y³ is independently a hydrolysable group or an alkyl group, such that at least one of Y¹, Y², and Y³ is a hydrolysable group.

Examples of ethylenically unsaturated groups include vinyl groups and (meth)acrylate groups. The (meth)acrylate group has the general structure H₂C=CHR-C(O)O- where C(O) refers to a carbonyl group, namely C=O and R is H (for acrylate groups) and methyl (for methacrylate groups). (Meth)acrylate hydrolysable silanes are particularly useful.

The linking group L₁ between the perfluoropolyether segment and ethylenically unsaturated endgroup includes a divalent or higher valency group selected from an alkylene, arylene, heteroalkylene, or combinations thereof and an optional divalent group selected from carbonyl, ester, amide, sulfonamide, or combinations thereof. L₁ can be unsubstituted or substituted with an alkyl, aryl, halo, or combinations thereof. The L₁ group typically has no more than 30 carbon atoms. In some compounds, the L₁ group has no more than 20 carbon atoms, no more than 10 carbon atoms, no more than 6 carbon atoms, or no more than 4 carbon atoms. For example, L₁ can be an alkylene, an alkylene substituted with an aryl group, or an alkylene in combination with an arylene or an alkyl ether or alkyl thioether linking group. Suitable examples of linking group L₁ include alkylene groups, especially alkylene groups with 1 to about 20 carbon atoms, arylene groups, aralkylene groups and heteroalkylene groups. Particularly useful examples include the alkylene groups ethylene (-CH₂CH₂-), propylene (-CH₂CH₂CH₂-), butylene (-CH₂CH₂CH₂CH₂-), phenylene (-C₆H₄-), and the like.

The groups Y¹, Y² and Y³ may be the same or different with the proviso that at least one is a hydrolysable group. Typical hydrolysable groups include, for example, chlorine atoms, acetoxy groups or alkoxy groups. Generally alkoxy groups are preferred because the hydrolysis product is an alcohol. Examples of useful alkoxy groups include, for example, methoxy, ethoxy, propoxy and the like. Typical non-hydrolysable groups which may comprise Y¹, Y² and Y³ include, for example, alkyl, aryl or substituted alkyl groups such as, for example, methyl, ethyl, propyl, phenyl, tolyl, and the like.

Examples of suitable ethylenically unsaturated hydrolysable silane monomers include, for example, vinyl silanes such as vinyltrimethoxysilane, or vinyltriethoxysilane, and (meth)acrylate silanes such as, 3-(acryloyloxy)propyltrimethoxysilane, 3-(methacryloyloxy)propyltrimethoxysilane, 3-(acryloyloxy)propyltriethoxysilane, 3-(methacryloyloxy)propyltriethoxysilane, 3-(acryloyloxy)propyltripropoxysilane, 3-(methacryloyloxy)propyltripropoxysilane, {3-(acryloyloxy)propyl}methyldimethoxysilane, {3-(methacryloyloxy)propyl}methyldimethoxysilane, {3-(acryloyloxy)propyl}methyldiethoxysilane, {3-(methacryloyloxy)propyl}methyldiethoxysilane, {3-(acryloyloxy)propyl}methyldipropoxysilane, {3-(methacryloyloxy)propyl}methyldipropoxysilane, {4-(acryloyloxy)butyl}phenyldimethoxysilane, {4-(methacryloyloxy)butyl}phenyldimethoxysilane, {3-(acryloyloxy)propyl}phenyldiethoxysilane, {3-(methacryloyloxy)propyl}phenyldiethoxysilane, {3-(acryloyloxy)propyl}phenyldipropoxysilane, {3-(methacryloyloxy)propyl}phenyldipropoxysilane, {3-(acryloyloxy)propyl}dimethylmethoxysilane, {3-(methacryloyloxy)propyl}dimethylmethoxysilane, {3-(acryloyloxy)propyl}dimethylethoxysilane, {3-(methacryloyloxy)propyl}dimethylethoxysilane, {3-(acryloyloxy)propyl}phenylmethylmethoxysilane, {3-(methacryloyloxy)propyl}phenylmethylmethoxysilane, {3-(acryloyloxy)propyl}phenylmethylethoxysilane, and {3-(methacryloyloxy)propyl}phenylmethylethoxysilane. Particularly useful is 3-(methacryloyloxy)propyltrimethoxysilane, commonly known as gamma-methacryloxypropyltrimethoxysilane or 3-(trimethoxysilyl)propylmethacrylate which is commercially available as SILQUEST A-174 from Crompton Corp.

The amount of ethylenically unsaturated hydrolysable silane monomer present in the reaction mixture used to form the copolymer composition of this disclosure can be about 1% to about 50% by weight, or 10% to 50% by weight, or even 20% to 40% by weight, of total monomer mixture.

The ethylenically unsaturated polyoxyalkylene monomer may be any suitable monomer containing at least one terminal ethylenically unsaturated group and a polyoxyalkylene chain. Such monomers may be described by the general formula:

R¹L₃-((CH₂)ₙCHR²O)ₘ-L₂X Formula 2

wherein
R¹ is H, an alkyl group having 1 to 18 carbon atoms, or X;
n ranges from 2 to 4;
m ranges from 4 to 5,000;
R² is H or a methyl group;
X comprises an ethylenically unsaturated group;
L₂ represents a single covalent bond or L₁ (i.e. a divalent linking group as previously described); and
L₃ represents a heteroatom or L₂.

Typically the ethylenically unsaturated polyoxyalkylene monomer has a molecular weight of at least 200 g/mole, 250 g/mole, or 300 g/mole. The molecular weight is typically no greater than about 5,000 g/mole, and generally less than about 3,000 g/mole.

In some embodiments, n is 1 or 2, and R may be H or a methyl group such that the ethylenically unsaturated polyoxyalkylene monomer is a polyoxyethylene monomer, a polyoxypropylene monomer or a monomer containing a mixture of polyoxyethylene and polyoxypropylene groups.

Particularly suitable monomers are polyoxyalkylene (meth)acrylates. These monomers are described by the general formula:

R³O-((CH₂)ₙCHR²O)ₘC(O)CHR=CH₂ Formula 3

wherein
R³ is H or an alkyl group with from 1 to 18 carbon atoms;
R² is H or a methyl group;
R is H or a methyl group;
n is an integer of from 1 to 3;
and m is an integer from 4 to about 5,000.

Suitable ethylenically unsaturated polyoxyalkylene monomers may be prepared from commercially available starting materials and widely known and accepted conventional techniques. For example, the monomers may be prepared by reacting an unsaturated carboxylic acid, such as acrylic acid or methacrylic acid, with an equimolar amount of a monoalcohol of a polyoxyalkylene. The esterification reaction is generally conducted under anhydrous conditions in an organic solvent, such as toluene, which preferably forms an azeotropic mixture with the water which is generated by the esterification reaction. Typically, the alcohol is combined with the organic solvent and the unsaturated carboxylic acid is then added. The reaction is conducted in the presence of an acid catalyst, such as para-toluenesulfonic acid, and a free-radical inhibitor, such as copper powder. The reaction mixture is refluxed for several hours under a nitrogen atmosphere and the resultant water removed by azeotropic distillation.

Examples of commercially available polyoxyalkylenes which may be used to prepare the monomers include the PLURONIC oxypropylene/oxyethylene copolymers available from BASF Corp., Mount Olive, NJ, and the CARBOWAX polyoxyethylenes available from Union Carbide Corp., South Charlston, WV. Polyoxyethylenes which may be used with the above-described procedure include, for example, CARBOWAX 350, CARBOWAX 550, CARBOWAX 750, CARBOWAX 2000 and CARBOWAX 5000 i.e., the methoxypolyoxyethylene ethanols with molecular weights of about 350, 550, 750, 2000 and 5000 grams/mole, respectively.

Examples of commercially available mono-acrylate polyoxyalkylene monomers useful in this discloser include, for example, methoxy polyethylene glycol monoacrylate, methoxy polyethylene glycol monomethacrylate, alkoxylated tetrahydrofurfuryl acrylate, alkoxylated lauryl acrylate, alkoxylated phenyl acrylate, tetrahydrofurfuryl acrylate, ethoxylated nonylphenol acrylate, propoxylated allyl methacrylate, ethoxylated hydroxyethyl methacrylate, ethoxylated nonylphenol methacrylate, and polypropylene glycol monomethacrylate. Particularly useful polyoxyalkylene (meth)acrylate monomers include those with the general structure CH₂=CMeC(O)-(OC₂H₄)ₘ₋OMe where m is an integer greater than 3, which are commercially available, for example as CD550, CD551, CD552, CD553 from Sartomer Company, Inc.

The amount of ethylenically unsaturated polyoxyalkylene monomer present in the reaction mixture used to form the copolymer composition of this disclosure can be about 1% to about 50% by weight, or 10% to 50% by weight, or even 20% to 40% by weight, of total monomer mixture.

The ethylenically unsaturated fluorinated polyether monomer may be any suitable monomer containing a terminal ethylenically unsaturated group and a fluorinated polyether group. Examples of suitable ethylenically unsaturated fluorinated polyether monomers can be represented by the formula:

R_{f}-L₁-X Formula 4

wherein
R_{f} is a fluorinated polyether group;
L₁ is a divalent linking group as defined above; and
X is an ethylnenically unsaturated group.

Examples of ethylenically unsaturated groups include vinyl groups and (meth)acrylate groups. (Meth)acrylate fluorinated polyethers are particularly useful.

The fluorinated polyether group R_{f} can be linear, branched, cyclic, or combinations thereof and can be saturated or unsaturated, it may partially fluorinated or fully fluorinated i.e a perfluoropolyether. The fluorinated polyether has at least four catenated oxygen heteroatoms. The fluorinated polyether groups can be described as containing repeating units and terminal units. Exemplary fluorinated polyether groups include those that have repeating units selected from the group of -(CₚB₂ₚ)-, -(CₚB₂ₚO)-, -(CB(Z))-, -(CB(Z)O)-, -(CB(Z)CₚB₂ₚO)-, -(CₚB₂ₚCB(Z)O)-, -(CB₂CB(Z)O)-, or combinations thereof, where each B is independently either an H atom or an F atom, in the case of perfluoropolyethers, each B is an F atom. In these repeating units, p is typically an integer of 1 to 10. In some embodiments, p is an integer of 1 to 8, 1 to 6, 1 to 4, or 1 to 3. The group Z is a an alkyl group, a fluorinated alkyl group, a perfluoroalkyl group, a perfluoroether group, a perfluoropolyether group, or a perfluoroalkoxy group, all of which can be linear, branched, or cyclic. The Z group typically has no more than 12 carbon atoms, no more than 10 carbon atoms, or no more than 9 carbon atoms, no more than 4 carbon atoms, no more than 3 carbon atoms, no more than 2 carbon atoms, or no more than 1 carbon atom. In some embodiments, the Z group can have no more than 4, no more than 3, no more than 2, no more than 1, or no oxygen atoms. In these fluorinated polyether structures, the different repeat units can be distributed randomly along the chain. The R_{f} terminal groups can be (CₚB₂ₚ₊₁)-, (CₚB₂ₚ₊₁O)-, (GCₚB₂ₚO)-, or (GCₚB₂ₚ)- where B is an H atom or an F atom, G is hydrogen, chlorine, or bromine and p is an integer of 1 to 10. In some embodiments, the terminal group is perfluorinated and p is an integer of 1 to 10, 1 to 8, 1 to 6, 1 to 4, or 1 to 3. Exemplary R_{f} groups include, for example, CF₃O(C₂F₄O)ₐCF₂-, C₃F₇O(CF₂CF₂CF₂O)ₐCF₂CF₂-, and C₃F₇O(CF(CF₃)CF₂O)ₐCF(CF₃)- wherein "a" has an average value of 0 to 50, 1 to 50, 3 to 30, 3 to 15, or 3 to 10.

The linking group L₁ between the perfluoropolyether segment and ethylenically unsaturated endgroup includes a divalent or higher valency group selected from an alkylene, arylene, heteroalkylene, or combinations thereof and an optional divalent group selected from carbonyl, ester, amide, sulfonamide, or combinations thereof. L₁ can be unsubstituted or substituted with an alkyl, aryl, halo, or combinations thereof. The L₁ group typically has no more than 30 carbon atoms. In some compounds, the L₁ group has no more than 20 carbon atoms, no more than 10 carbon atoms, no more than 6 carbon atoms, or no more than 4 carbon atoms. For example, L₁ can be an alkylene, an alkylene substituted with an aryl group, or an alkylene in combination with an arylene or an alkyl ether or alkyl thioether linking group.

Perfluoropolyether acrylate compounds can be synthesized by known techniques such as described in U.S. Patent Nos. 3,553,179 and 3,544,537 as well as U.S. Patent Application Publication No. 2004/0077775.

The fluorinated polyether (meth)acrylate compounds may be produced by introducing (meth)acrylate groups at the hydroxyl group of fluorinated polyether compounds having a terminal hydroxyl group. In some embodiments, the fluorinated polyether compounds with a terminal hydroxyl group may be a highly fluorinated. Suitable examples of such hydroxyl-group containing fluorinated polyether compounds includes for example:
HOCH₂-CF₂O-(CF₂CF₂O)ₗ-(CF₂O)ₘ-CF₂CH₂OH; F-(CF₂CF₂CF₂O)ₗ-CF₂CF₂CH₂OH; F-(CF(CF₃)CF₂O)ₗ-CF(CF₃)CH₂OH; HOCH₂-CF(CFₐ)O-(CF₂CF(CF₃)O)ₗ-O(CF₂)ₘ-O-(CF(CF₃)CF₂O)ₗ-OCF(CF₃)CH₂OH; HO(CH₂CH₂O)ₙ-CH₂-CF₂O-(CF₂CF₂O)ₗ-(CF₂O)ₘ-CF₂CH₂(OCH₂CH₂)ₙOH; CF₃OCF₂CF₂CF₂OCHFCF₂C(O)NHCH₂CH₂OH; CF₃CF₂CF₂OCHFCF₂C(O)NHCH₂CH₂OH; CF₃CF₂CF₂OCHFCF₂CH₂OH; CF₃CFH-O-(CF₂)₅CH₂OH; CF₃-O-CF₂-O-CF₂-CF₂-O-CF₂-CHF-CF₂CH₂OH; CF₃-(O-CF₂)₂-O-CF₂-CF₂-O-CHF-CF₂-CH₂OH; and
HOCH₂CH(OH)CH₂O-CH₂-CF₂O-(CF₂CF₂O)ₗ-(CF₂O)ₘ-CF₂CH₂OCH₂CH(OH)CH₂OH where each l, m and n is an integer of at least 1.

In some embodiments, the perfluoropolyether group comprises an "HFPO-" end group, i.e. the end group F(CF(CF₃)CF₂O)ᵤCF(CF₃)- (of the methyl ester F(CF(CF₃)CF₂O)ᵤCF(CF₃)C(O)OCH₃) wherein u averages 2 to 50 or even 4 to 50. In some embodiments, u averages at least 3 or 4. Typically, u is no greater than 8 or 10. Such compounds generally exist as a distribution or mixture of oligomers with a range of values for u, so that the average value of u may be non-integer. In one embodiment, u averages about 7. A particularly useful fluorinated methacrylate monomer has the structure:

F(CF(CF₃)CF₂O)ᵤCF(CF₃)-C(O)N(H)CH₂CH₂OC(O)CMe=CH₂ Formula 5

where u averages about 6.84, with an average molecular weight of 1,344 g/mol.

The amount of ethylenically unsaturated fluorinated polyether monomer present in the reaction mixture used to form the copolymer composition of this disclosure can be about 1% to about 50% by weight, or 10% to 50% by weight, or even 20% to 40% by weight, of total monomer mixture.

At least one free-radical initiator is typically utilized for the preparation of the copolymer of this disclosure. Useful free-radical thermal initiators include, for example, azo, peroxide, persulfate, and redox initiators, and combinations thereof. Useful free-radical photoinitiators include, for example, those known as useful in the UV cure of acrylate polymers. Particularly useful are thermal initiators including, for example, azonitrile initiators such as those commercially available from E.I. duPont de Nemours &Co.; Wilmington, DE under the trade name "VAZO-67".

The initiator is added in an amount to effect the desired polymerization of the monomers. Typically the initiator is used in the amount of 0.01-5.0 parts by weight, more typically 0.015-2.0 parts by weight based upon the total weight of monomers used.

Besides the ethylenically unsaturated hydrolysable silane, ethylenically , unsaturated polyoxyalkylene, and ethylenically unsaturated fluorinated polyether monomers, additional copolymerizable ethylenically unsaturated monomers may be used. Such monomers may be used to modify the properties of the formed polymer, such as to alter the glass transition temperature, for example, or may be used as inexpensive monomers to reduce the cost of the final polymer. Useful ethylenically unsaturated monomers include, for example, methyl acrylate, butyl acrylate, n-octyl acrylate, iso-octyl acrylate, octadecyl acrylate, vinyl acetate, styrenes, silicone acrylates, 2-(N,N-dimethylamino)ethyl methacrylate, n-C₄F₉CH₂CH₂OC(O)CH=CH₂, C₆F₁₃CH₂CH₂OC(O)CH=CH₂, C₄F₉SO₂NMeCH₂CH₂OC(O)CH=CH₂ and the like.

The molecular weight of the perfluoropolyether polymer may be controlled by adding a suitable chain transfer agent. Chain transfer agents can be used to promote chain termination and limit gel formation. Useful chain transfer agents include, for example, thiols, and polyhalocarbons. Examples of commercially available chain transfer agents include tetrabromomethane, 1-hexanethiol, 1-heptanethiol, 1-octanethiol, 1-nonanethiol, 1-decanethiol, 1-dodecanethiol, 1-octadecyl mercaptan, 1-pentadecanethiol, 1-hexadecyl mercaptan, tert-nonyl mercaptan, tert-hexadecyl mercaptan, tert-tetradecyl mercaptan, 1H,1H,2H,2H-perfluorohexanethiol and 1H,1H,2H,2H-perfluorododecyl-1-thiol.

In some embodiments it may desirable to use a chain transfer agent that contains reactive groups, such as hydrolysable silane groups, which are useful for further introduction of hydrolysable silanes at the terminus of the formed copolymer. The chain transfer agents with hydrolysable silane groups include, for example, 3-mercaptopropyltrimethoxysilane, 3-mercaptoproyltriethoxysilane, 2-mercaptoethyltriethoxy silane, 3-mercaptopropylmethyldimethoxysilane, and the like. The chain transfer agent 3-mercaptopropyltrimethoxysilane, is particularly suitable and is commercially available as SILQUEST A-189 from Momentive Performance Materials.

The chain transfer agent may also contain polyoxyalkylene units. The preparation of a mercaptan chain transfer agent with an polyoxyalkylene unit can be made according to known procedures described in the literature, such as the esterification of CH₃O(CH₂CH₂O)ₑ-H with HSCH₂CO₂H to form CH₃O(CH₂CH₂O)ₑ-C(O)CH₂SH.

Curable coating compositions can be prepared from mixtures of a curable sol-gel component and a copolymer prepared from a reaction mixture comprising an ethylenically unsaturated hydrolysable silane, an ethylenically unsaturated polyoxyalkylene, an ethylenically unsaturated fluorinated polyether and an initiator. In some embodiments the curable coating compositions may contain a majority of curable sol-gel component. The curable coating composition may be used to provide curable coatings or curable coating layers. These coatings may be, for example, hardcoats or hardcoat layers.

The curable coating composition, especially when used as a hardcoat surface layer or an underlying hardcoat layer, typically contains surface modified inorganic particles that add mechanical strength and durability to the resultant coating. The particles are typically substantially spherical in shape and relatively uniform in size. The particles can have a substantially monodisperse size distribution or a polymodal distribution obtained by blending two or more substantially monodisperse distributions. The inorganic oxide particles are typically non-aggregated (substantially discrete), as aggregation can result in precipitation of the inorganic oxide particles or gelation of the hardcoat. The inorganic oxide particles are typically colloidal in size, having an average particle diameter of about 0.001 to about 0.2 micrometers, less than about 0.05 micrometers, and less than about 0.03 micrometers. These size ranges facilitate dispersion of the inorganic oxide particles into the binder resin and provide ceramers with desirable surface properties and optical clarity. The average particle size of the inorganic oxide particles can be measured using transmission electron microscopy to count the number of inorganic oxide particles of a given diameter. The inorganic oxide particles can consist essentially of or consist of a single oxide such as silica, or can comprise a combination of oxides, such as silica and aluminum oxide, or a core of an oxide of one type (or a core of a material other than a metal oxide) on which is deposited an oxide of another type. Silica is a common inorganic particle. The inorganic oxide particles are often provided in the form of a sol containing a colloidal dispersion of inorganic oxide particles in liquid media. The sol can be prepared using a variety of techniques and in a variety of forms including hydrosols (where water serves as the liquid medium), organosols (where organic liquids so serve), and mixed sols (where the liquid medium contains both water and an organic liquid), e.g., as described in U.S. Pat. Nos. 5,648,407 (Goetz et al.); 5,677,050 (Bilkadi et al.) and 6,299,799 (Craig et al.). Aqueous sols (e.g. of amorphous silica) can be employed. Sols generally contain at least 2 wt-%, at least 10 wt-%, at least 15 wt-%, at least 25 wt-%, and often at least 35 wt-% colloidal inorganic oxide particles based on the total weight of the sol. The amount of colloidal inorganic oxide particle is typically no more than 50 wt-% (e.g. 45 wt-%). The surface of the inorganic particles can be "acrylate functionalized" as described in Bilkadi et al. The sols can also be matched to the pH of the binder, and can contain counterions or water-soluble compounds (e.g., sodium aluminate), all as described in US Patent No. 6,238,798 (Kang et al.).

Various high refractive index inorganic oxide particles can be employed such as for example zirconia ("ZrO₂"), titania ("TiO₂"), antimony oxides, alumina, tin oxides, alone or in combination. Mixed metal oxide may also be employed. Zirconias for use in the high refractive index layer are available from Nalco Chemical Co. under the trade designation "Nalco OOSSOO8" and from Buhler AG Uzwil, Switzerland under the trade designation "Buhler zirconia Z-WO sol". Zirconia nanoparticle can also be prepared such as described in U.S. Patent No. 6,376,590.

The inorganic nanoparticles of the hardcoat are preferably treated with a surface treatment agent. Surface-treating the nano-sized particles can provide a stable dispersion in the polymeric resin. Preferably, the surface-treatment stabilizes the nanoparticles so that the particles will be well dispersed in the polymerizable resin and results in a substantially homogeneous composition. Furthermore, the nanoparticles can be modified over at least a portion of its surface with a surface treatment agent so that the stabilized particle can copolymerize or react with the polymerizable resin during curing. The incorporation of surface modified inorganic particles is amenable to covalent bonding of the particles to the free-radically polymerizable organic components, thereby providing a tougher and more homogeneous polymer/particle network.

In general, a surface treatment agent has a first end that will attach to the particle surface (covalently, ionically or through strong physisorption) and a second end that imparts compatibility of the particle with the resin and/or reacts with resin during curing. Examples of surface treatment agents include alcohols, amines, carboxylic acids, sulfonic acids, phosphonic acids, silanes and titanates. The preferred type of treatment agent is determined, in part, by the chemical nature of the metal oxide surface. Silanes are preferred for silica and for other siliceous fillers. Silanes and carboxylic acids are preferred for metal oxides such as zirconia. The surface modification can be done either subsequent to mixing with the monomers or after mixing. It is preferred in the case of silanes to react the silanes with the particle or nanoparticle surface before incorporation into the resin. The required amount of surface modifier is dependant upon several factors such as particle size, particle type, modifier molecular weight, and modifier type. In general, it is preferred that approximately a monolayer of modifier is attached to the surface of the particle. The attachment procedure or reaction conditions required also depend on the surface modifier used. For silanes it is preferred to surface treat at elevated temperatures under acidic or basic conditions for from 1-24 hours approximately. Surface treatment agents such as carboxylic acids may not require elevated temperatures or extended time.

Representative embodiments of surface treatment agents suitable for the compositions include compounds such as, for example, isooctyl trimethoxy-silane, N-(3-triethoxysilylpropyl) methoxyethoxyethoxyethyl carbamate, N-(3- triethoxysilylpropyl) methoxyethoxyethoxyethyl carbamate, 3-(methacryloyloxy)propyltrimethoxysilane, 3-acryloxypropyltrimethoxysilane, 3-(methacryloyloxy)propyltriethoxysilane, 3-(methacryloyloxy) propylmethyldimethoxysilane, 3-(acryloyloxypropyl)methyldimethoxysilane, 3-(methacryloyloxy)propyldimethylethoxysilane, 3-(methacryloyloxy) propyldimethylethoxysilane, vinyldimethylethoxysilane, phenyltrimethoxysilane, n-octyltrimethoxysilane, dodecyltrimethoxysilane, octadecyltrimethoxysilane, propyltrimethoxysilane, hexyltrimethoxysilane, vinylmethyldiacetoxysilane, vinylmethyldiethoxysilane, vinyltriacetoxysilane, vinyltriethoxysilane, vinyltriisopropoxysilane, vinyltrimethoxysilane, vinyltriphenoxysilane, vinyltri-t-butoxysilane, vinyltris-isobutoxysilane, vinyltriisopropenoxysilane, vinyltris(2-methoxyethoxy)silane, styrylethyltrimethoxysilane, mercaptopropyltrimethoxysilane, 3-glycidoxypropyltrimethoxysilane, acrylic acid, methacrylic acid, oleic acid, stearic acid, dodecanoic acid, 2-{2-(2-methoxyethoxy)ethoxy}acetic acid (MEEAA), beta-carboxyethylacrylate (BCEA), 2-(2-methoxyethoxy)acetic acid, methoxyphenyl acetic acid, and mixtures thereof.

The surface modification of the particles in the colloidal dispersion can be accomplished in a variety known ways, such as described in U.S. Patent No. 6,376,590.

A cyclic functional group subject to ring opening polymerization generally contains a heteroatom such as oxygen, sulfur or nitrogen, and preferably a 3-membered ring containing oxygen such as an epoxide.

A suitable combination of surface modifying agent includes at least one surface modifying agent having a functional group that is copolymerizable with the organic component (e.g. having an acrylate, methacrylate, or vinyl group) of the polymerizable resin and a second amphiphilic modifying agent, such as a polyether silane, that may act as a dispersant. The second modifying agent is generally a polyoxyalkylene containing modifying agent that is optionally co-polymerizable with the organic component of the polymerizable composition.

Surface modified colloidal nanoparticles can be substantially fully condensed. Non-silica containing fully condensed nanoparticles typically have a degree of crystallinity (measured as isolated metal oxide particles) greater than 55%, preferably greater than 60%, and more preferably greater than 70%. For example, the degree of crystallinity can range up to about 86% or greater. The degree of crystallinity can be determined by X-ray diffraction techniques. Condensed crystalline (e.g. zirconia) nanoparticles have a high refractive index whereas amorphous nanoparticles typically have a lower refractive index.

A particularly useful sol-gel coating composition useful for blending with the copolymer prepared from a reaction mixture comprising an ethylenically unsaturated hydrolysable silane, an ethylenically unsaturated polyoxyalkylene, an ethylenically unsaturated fluorinated polyether and an initiator to form a curable coating composition is a silicone hardcoat composition commercially available from GE Silicones, Waterford, NY under the trade name "SHC1200". Other examples of commercially available thermally-cured silicone based sol-gel hardcoats are AS4000, AS 4700, SCH4002, SCH5020, and PHC587.

The curable coating compositions of this disclosure may be used to prepare a variety of different coatings. Typically the curable coating composition forms a hardcoat layer. These hardcoat layers may have a variety of desirable properties including, for example, optical clarity, easy cleaning, lint repellency, ink resistance, and the like. The addition of fluorinated materials to hardcoat compositions can assist in providing ink resistance, but may disadvantageously provide increased attraction to lint. Coating compositions of the present disclosure provide a balance of ink resistance and lint resistance.

The curable coating composition may be used as a single layer construction or may be used as part of a multi-layer construction. For example, additional hardcoat layers may be applied beneath the curable coating composition such that the curable coating composition forms a surface layer. The thickness of the one-layer hardcoat surface layer or underlying hardcoat of a two-layer hardcoat is typically at least 0.5 micrometers, preferably at least 1 micrometer, and more preferably at least 2 micrometers. The thickness of the hardcoat layer is generally no greater than 25 micrometers. Preferably the thickness ranges from 3 micrometers to 5 micrometers. For a two-layer construction the cured surface layer typically has a thickness of at least about 10 nanometers and preferably at least about 25 nanometers. The surface layer typically has a thickness of less than about 200 nanometers, 100 nanometers, or 75 nanometers. Generally, for ease of processing, the curable coating composition is used as a single layer construction.

The curable coating composition may be applied to the substrate by a variety of conventional techniques such as, for example, spraying, knife coating, notch coating, reverse roll coating, gravure coating, dip coating, bar coating, flood coating, or spin coating. The composition may be applied to any thickness to provide the desired level of water, oil, stain, and soil repellency. Typically, the composition is applied to the substrate as a relatively thin layer resulting in a dried cured layer having a thickness in a range of from about 40 nanometers to about 60 nanometers, although thinner and thicker (e.g., having a thickness up to 100 micrometers or more) layers may also be used. After the curable coating composition is coated on a substrate, typically any optional solvent is at least partially removed (e.g., using a forced air oven), and the composition is then at least partially cured to form a durable coating. Typically the composition is heated to cure to a durable coating.

A suitable coating method for application of curable coating compositions of the present disclosure includes dip coating. A substrate to be coated can typically be contacted with the treating composition at room temperature. Alternatively, the mixture can be applied to substrates that are preheated at a temperature of, for example, between 60 and 150°C. This is of particular interest for industrial production, where, e.g., ceramic tiles can be treated immediately after the baking oven at the end of the production line. Following application, the treated substrate can be dried and cured at ambient or elevated temperature, e.g. at 40 to 300°C and for a time sufficient to dry. The process may also require a polishing step to remove excess material.

The coating compositions and curable coating compositions of this disclosure may be applied to variety of substrates to form a variety of articles. Typically the curable coating compositions of this disclosure are applied to a substrate to provide a protective coating on the substrate that is relatively durable, and more resistant to contamination and easier to clean than the substrate surface itself. Generally, protective coatings are relatively thin, in some instances the thickness of the coating is less than 10 micrometers, or even less than 5 micrometers and the coating material is typically present in an amount that does not substantially change the appearance and optical characteristics of the substrate surface.

A variety of substrates can be coated with the curable coating compositions of this disclosure to form articles. Suitable substrate materials include glass, polymers (thermosetting or thermoplastic), ceramic, stone, wood, fibrous substrates, or metal. Polymeric substrates may be in the form of relatively thin films or relatively thick plates or plaques. Examples of suitable polymeric substrates include, for example, polycarbonate, poly(meth)acrylate (e.g., polymethyl methacrylate or "PMMA"), polyolefins (e.g., polypropylene or "PP"), polyurethane, polyesters (e.g., polyethylene terephthalate or "PET"), polyamides, polyimides, phenolic resins, cellulose diacetate, cellulose triacetate, polystyrene, styrene-acrylonitrile copolymers, epoxies, and the like. Typically the substrate will be chosen based in part on the desired optical and mechanical properties for the intended use. Such mechanical properties typically will include flexibility, dimensional stability and impact resistance. The substrate thickness typically also will depend on the intended use. The substrate can be treated to improve adhesion between the substrate and the hardcoat layer, e.g., chemical treatment, corona treatment such as air or nitrogen corona, plasma, flame, or actinic radiation. If desired, an optional tie layer or primer can be applied to the substrate and/or hardcoat layer to increase the interlayer adhesion.

One class of suitable films includes light transmissive optical films such as, for example, multilayer optical films, microstructured films such as retroreflective sheeting and brightness enhancing films, (e.g. reflective or absorbing) polarizing films, diffusive films, as well as (e.g. biaxial) retarder films and compensator films such as described in U.S. Patent Application Publication No. 2004/0184150.

The hardcoat or a protective film prepared from such a hardcoat is suitable for use with various articles such as optical displays and display panels. The term "optical display", or "display panel", can refer to any conventional optical displays, including but not limited to multi-character multi-line displays such as liquid crystal displays ("LCDs"), plasma displays, front and rear projection displays, cathode ray tubes ("CRTs"), and signage, as well as single-character or binary displays such as light emitting diodes ("LEDs"), signal lamps, and switches. The exposed surface of such display panels may be referred to as a "lens." The hardcoat of this disclosure is particularly useful for displays having a viewing surface that is susceptible to being touched or contacted by ink pens, markers and other marking devices, wiping cloths, paper items and the like.

The protective coatings of this disclosure can be employed in a variety of portable and non-portable information display articles. These articles include PDAs, cell phones (including combination PDA/cell phones), LCD televisions (direct lit and edge lit), touch sensitive screens, wrist watches, car navigation systems, global positioning systems, depth finders, calculators, electronic books, CD and DVD players, projection television screens, computer monitors, notebook computer displays, instrument gauges, instrument panel covers, signage such as graphic displays and the like. The viewing surfaces can have any conventional size and shape and can be planar or non-planar, although flat panel displays are preferred. The coating composition or coated film, can be employed on a variety of other articles as well such as for example camera lenses, eyeglass lenses, binocular lenses, mirrors, retroreflective sheeting, automobile windows, building windows, train windows, boat windows, aircraft windows, vehicle headlamps and taillights, display cases, road pavement markers (e.g. raised) and pavement marking tapes, overhead projectors, stereo cabinet doors, stereo covers, watch covers, as well as optical and magneto-optical recording disks, and the like.

Additionally the curable coating compositions of this disclosure may be used with a wide variety of substrates which are not films. For example, the curable coating composition may be applied to metal substrates, to plastic articles, to ceramic articles, to glass articles, or stone articles to form a protective layer on the surface of the articles or substrate. Examples include, for example, tiles, counter tops, windows, protective face shields, lenses, decorative stone articles, and the like. The substrates can optionally be treated to improve adhesion between the substrate and the hardcoat layer, for example, by applying a primer.

The curable coating compositions of this disclosure have the desirable balance of properties including ink resistance (easy cleaning) and lint resistance. Ink repellency and lint resistance can be measured in a variety of ways. One particularly useful method for determining lint resistance is to determine the cellulose surface attraction using the cellulose haze test presented in the examples section. It is desirable for coatings to have a cellulose surface attraction of less than about 10% as measured using the linting test (cellulose haze) test method.

Another useful analytical technique which can be used to characterize and analyze the hardcoat coatings is X-ray Photoelectron Spectroscopy (XPS) also sometimes known as ESCA (Electron Spectroscopy for Chemical Analysis). XPS provides a quantitative measure of the elemental and chemical compositions of the outermost 30-100 Angstroms of a sample surface. In the XPS experiment, the surface to be tested is bombarded with X-rays to eject core level electrons from the atoms in the outermost 30-100 Angstroms of the surface. When the energy of the incident photon beam is greater than or equal to that of the binding energy of a bound electron, the electron is emitted by a process called the photoelectron effect. The kinetic energy (KE) of the ejected photoelectrons can then be measured using an electron energy analyzer, from which the binding energy (BE) can be determined. The BE of this photoelectron is characteristic of the element (and its chemical state) from which it originated. The area under a given peak in an XPS spectrum is proportional to the number of atoms corresponding to that element.

XPS can be carried out on the cured coatings of this disclosure. While not wishing to be bound by theory, it is believed that this technique demonstrates that the fluorochemical component tends to concentrate at the surface of the coating. This concentration at the surface, which is sometimes called "blooming to the surface", permits a relatively small amount of fluorinated additive to dramatically influence the surface characteristics of the coating. Also, as the data presented in the Examples section below show, unlike urethane-based fluorochemical polymer additives, no or essentially no nitrogen is detected in the XPS analysis.

### Examples

These examples are merely for illustrative purposes only and are not meant to be limiting on the scope of the appended claims. All parts, percentages, ratios, etc. in the examples and the rest of the specification are by weight, unless noted otherwise. Solvents and other reagents used were obtained from Sigma-Aldrich Chemical Company; Milwaukee, Wisconsin unless otherwise noted.

**Table of Abbreviations**

| **Abbreviation or Trade Designation** | **Description** |
|---|---|
| HFPO-Mar | Perfluorinated polyether methacrylate monomer, containing an HFPO end group with the structure: |
| | F(CF(CF₃)CF₂O)ᵤCF(CF₃)-C(O)N(H)CH₂CH₂OC(O)CMe=CH₂ where u averages about 6.84, with an average molecular weight of 1,344 g/mol, prepared by a procedure similar to that described in U.S. Publication No. 2004-0077775 for the monomer synthesis of (HFPO)ₓ-methacrylate. |
| PEG-Mar | A polyoxyethylen methacrylate with a molecular weight of about 454 g/mol, and the structure: CH₃O-(C₂H₄O)ₙ-C(O)CMe=CH₂, commercially available from Sigma-Aldich Chemicals. |
| Si-Mar | A trimethoxysilane substituted methacrylate with the structure: CH₂=CMeC(O)O(CH₂)₃Si(OMe)₃, available from Silquest under the trade name "A-174". |
| CTA | Chain transfer agent, a trimethoxysilane substituted thiol with the structure: HSC₃H₆Si(OMe)₃, commercially available from Silquest under the trade name "A-189". |
| HFPO-OH | HFPO-C(O)N(H)CH₂CH₂OH, prepared by a procedure similar to that described in U.S. 7,094,829 (Audenaert et al.). |
| P-Iso | Polyisocyanate, a triisocyanate-functional biuret derived from reacting 3 moles of 1,6-hexamethylene diisocyanate with 1 mole of water, commercially available from Bayer Polymers LLC, of Pittsburgh, PA, as "DESMODUR N-100". |
| APTMS | Aminopropyltrimethoxysilane |
| DBTDL | Di-n-butyl tin dilaurate |
| SAO-1 | Silane Acrylate Oligomer Alcohol prepared as described in Preparative Example P1 below. |
| Sol-gel | Silicone sol-gel hardcoat used as received, commercially available from GE Silicones of Waterford, NY under the trade name "SHC1200". |
| Primer | (Poly(methyl methacrylate)-based primer composition used as received, commercially available from GE Silicones of Waterford, NY under the trade name "SHP 401". |
| Initiator | Thermal free radical polymerization initiator commercially available from E.I. duPont de Nemours &Co.; Wilmington, DE under the trade name "VAZO-67". |
| PC Film | ROW TEC Polycarbonate Film commercially available from Multi-Plastics, Inc., Lewis Center, OH. |
| PC Plaque | Polycarbonate plaque molded by Minnesota Mold & Engineering, Vadnais Heights, MN from GE LEXAN 101 from General Electric, Mount Vernon, IN. |
| PMMA Film | Polymethyl methacrylate film commercially available from Mitsubishi Rayon Co. as "ACRYPET MF". |
| PMMA Plaque | Polymethyl methacrylate plaque obtained from Plastics International, Eden Prairie, MN. |
| IPA | Isopropanol |
| MIBK | Methyl isobutyl ketone |
| EtOAc | Ethyl acetate |
| MEK | Methyl ethyl ketone |
| DMF | Dimethyl formamide |
| Glass Micro Slide | Glass microscope slides, 75 x 50 millimeter No. 2947 glass slides commercially available from Coming Glass Works, Coming, NY. |
| Coating-1 | Commercially available coating composition available from 3M Company, St. Paul, MN as "3M EASY CLEAN COATING ECC-1000", used as obtained. |

### Test Methods

### Linting Test (Cellulose Haze):

After the coating was prepared it was allowed to sit at room temperature for 24 hours to allow it to be charged. After that time it was cleaned with a Simco "Viper" static neutralizing gun to remove any dust. Then 0.35 grams of alpha-cellulose (C-8002) from Sigma-Aldrich Chemical Company (St. Louis, MO) was applied to the top of the coating in a 7 cm diameter. The coated film was tilted back and forth several times to allow the cellulose to evenly coat the test area. The excess cellulose was then shaken off and the haze of the coating plus cellulose was measured according to ASTM D1003. The measured % haze is a measure of the cellulose surface attraction.

### Ink Repellency Test and Rating:

This test is used to measure the ink repellency of the coatings. Coated PET (polyethylene terephthalate) films are prepared as described in the examples. A line was drawn across the surface of the coated substrate using a SHARPIE marker (available from Sanford, Bellwood, IL). The samples were rated for appearance and for the ability to repel a black SHARPIE marker.

| **Ranking** | **Description** |
|---|---|
| 1 | Ink beaded into discrete hemispherical droplets |
| 2 | Ink beaded into discrete elongated droplets |
| 3 | Ink line narrowed and discontinuous |
| 4 | Ink line continuous and slightly narrowed |
| 5 | Ink line continuous and unnarrowed |

### Contact Angle:

The coatings were rinsed for 1 minute by hand agitation in isopropyl alcohol before being subjected to measurement of water and hexadecane contact angles. Measurements were made using as-received reagent-grade hexadecane and deionized water filtered through a filtration system obtained from Millipore Corporation (Billerica, MA), on a video contact angle analyzer available as product number VCA-2500XE from AST Products (Billerica, MA). Reported values are the averages of measurements on at least three drops measured on the right and the left sides of the drops. Drop volumes were 5 microliters for static measurements and 1-3 microliters for advancing and receding. For hexadecane, only advancing and receding contact angles are reported because static and advancing values were found to be nearly equal.

### Solvent Resistant Test:

On the coated and cured film, an ∼0.5 inch (∼1.27 cm) diameter drop of solvent (as indicated below) was applied to the coated surface. The appearance of the coating was visually rated and recorded after the solvent was evaporated to dry at room temperature. In the Tables, "C" is for Clear (no change of the coating appearance). The Ink Repellency Test was then conducted over the solvent dried spot using a SHARPIE Fine Point, Series 30000 permanent marker and the samples were rated from 1 to 5 according to the scale above. Reported values are the average of three time ratings.

### Cleaning Tissue Durability Test

The coated polycarbonates were cleaned with Sight Savers Pre-moistened Lens Cleaning Tissue (Bausch & Lomb), back and forth for one hundred times, unless specifically noted. The cleaned area was then dried and tested with a SHARPIE marker, and rated according to Ink Repellency Test.

### X-ray Photoelectron Spectroscopy (XPS)

Samples of films coated with a cured hardcoat coating were tested. The samples were wiped with isopropanol prior to testing. XPS data were acquired using a Kratos AXIS Ultra DLD spectrometer with a monochromatic Al-Kₐ X-ray source. The emitted photoelectrons were detected at a 90 degree take-off angle with respect to the sample surface. A low-energy electron flood gun was used to minimize surface charging. The area analyzed for each data point was approximately 700 micrometers x 300 micrometers. High-resolution C1s spectra were acquired using a pass energy of 20 eV and ere charge referenced to the C1s hydrocarbon peak set to 285.0 eV.

### Hardness Testing

All specimens were tested without modification on a MTS DCM Nanoindenter. The coatings were tested probing from the top surface. For all experiments a *diamond Berkovich probe* was used. Spatial drift setpoint was set at 0.5 nm/s maximum. A constant strain rate experiment was run at 0.05 /s to a command depth of 200 nm. The areas to be tested were located as seen top-down as viewed through a video screen with 100X magnification. The test regions are selected locally with 100X video magnification of the DCM to insure that tested regions are representative of the desired sample material, i.e. free of voids, inclusions, or debris. Furthermore, microscope optical axis -to- indenter axis alignment was checked and calibrated previous to testing by an iterative process where test indentations are made into a fused quartz standard, with error correction provided by software in the XP. The dynamic excitation frequency and amplitude of the indenter was held constant at 75 hz and 1 nm for all experiments. 15 tests were performed for each sample to assess reproducibility. Outlier test data was discarded as artifacts of defects present on the surface.

### Preparative Example PI: Preparation of SAO-1 Silane Acrylate Oligomer Alcohol:

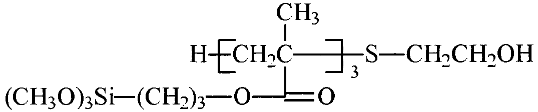

In a glass bottle was placed 14.90 grams of Si-Mar, 1.56 grams of HSCH₂CH₂OH, 38.4 grams of ethyl acetate and 0.3 grams of Initiator. After bubbling the solution with nitrogen for 1 minute, the sealed bottle was polymerized in a 70°C oil bath with a magnetic stirring for 24 hours, which gave a clear solution having 30% solids. From FTIR analysis, no CH₂=CMeC(O)- signal was observed, indicating the completed oligomerization (average molecular weight = 822):

### Example 1:

A polymer with a monomer weight ratio of HFPO-Mar/PEG-Mar/Si-Mar/CTA of 40/20/40/5 was prepared. In a glass bottle was placed HFPO-Mar (4.0 grams), PEG-Mar (2.0 grams), Si-Mar (4.0 grams), CTA (0.5 grams), Initiator (0.235 grams) and 40 grams of ethyl acetate. The mixture was bubbled with nitrogen gas for 1 minute, sealed and heated in 70°C oil bath for 24 hours. A clear homogeneous solution was obtained. FT-IR analysis indicated the absence of a signal for the presence of an acrylate double bond. This 20% solids polymer solution was used to make coating formulations with Sol-gel for evaluation.

### Example 2:

A polymer with a monomer weight ratio of HFPO-Mar/PEG-Mar/Si-Mar/CTA of 40/30/30/5 was prepared. In a glass bottle was placed HFPO-Mar (4.0 grams), PEG-Mar (3.0 grams), Si-Mar (3.0 grams), CTA (0.5 grams), Initiator (0.235 grams) and 40 grams of ethyl acetate. The mixture was bubbled with nitrogen gas for 1 minute, sealed and heated in 70°C oil bath for 24 hours. A clear homogeneous solution was obtained. FT-IR analysis indicated the absence of a signal for the presence of an acrylate double bond. This 20% solids polymer solution was used to make coating formulations with Sol-gel for evaluation.

### Example 3:

A polymer with a monomer weight ratio of HFPO-Mar/PEG-Mar/Si-Mar/CTA of 40/40/20/5 was prepared. In a glass bottle was placed HFPO-Mar (4.0 grams), PEG-Mar (4.0 grams), Si-Mar (2.0 grams), CTA (0.5 grams), Initiator (0.235 grams) and 40 grams of ethyl acetate. The mixture was bubbled with nitrogen gas for 1 minute, sealed and heated in 70°C oil bath for 24 hours. A clear homogeneous solution was obtained. FT-IR analysis indicated the absence of a signal for the presence of an acrylate double bond. This 20% solids polymer solution was used to make coating formulations with Sol-gel for evaluation.

### Comparative Example C-1

A polymer with a monomer equivalent ratio of HFPO-OH/P-Iso/SAO-1/APTMS of 1/3/1/1 was prepared. In a glass bottle was placed P-Iso (5.73 grams), HFPO-OH (13.14 grams), SAO-1 (27.4 grams of a 30% solution, 8.22 grams solids), 49.5 grams of EtOAc solvent and 5 drops of DBTDL catalyst. The sealed bottle was placed in a 70°C oil bath with a magnetic stirring for 4 hours and then cooled to room temperature. To this mixture was added 2.21 grams of APTMS and the mixture was reacted at room temperature for 0.5 hour, followed by reaction at 70°C for another 4 hours. A 30% solids clear solution was obtained which from FTIR analysis, showed no unreacted -NCO signal, indicating the completed reaction.

### Comparative Example C-2

A polymer with a monomer equivalent ratio of P-Iso/ HFPO-OH/APTMS of 1/0.15/0.85 was prepared. In a round bottom flask equipped with a magnetic stir bar was added 6.25 grams of P-Iso, 17.69 grams of tetrahydrofuran (THF), and 0.00079 gram of DBTDL (50 ppm based on the total solids, added from a 10% solids solution of DBTDL in methyl ethyl ketone). The flask was placed under a nitrogen atmosphere and placed in an oil bath at 55°C. To this mixture was added 6.45 grams HFPO-OH via a dropping funnel over about a 10 minute period. Two hours after the addition of the HFPO-OH was complete, 4.99 grams of APTMS was added via a dropping funnel to the reaction over about a 15 minute period. Two hours after the addition of the APTMS was complete, FTIR showed the absence of an isocyanate peak at 2265 cm⁻¹. The reaction was adjusted to 50 % solids by addition of THF, then diluted to 30 % solids by addition of isopropanol.

### Comparative Example C-3

A polymer with a monomer weight ratio of HFPO-Mar/Si-Mar/CTA of 2/8/0.2 was prepared. In a glass bottle was placed HFPO-Mar (2.0 grams), Si-Mar (8.0 grams), CAT-1 (0.2 gram), 30 grams of MEK solvent and 0.2 grams of Initiator. A stream of nitrogen was bubbled through the mixture for 1 minute, the bottle was sealed, and placed in a 70°C oil bath and stirred for 24 hours.

### Examples 4-8 and Comparative Examples C4-C7

For Examples 4-8 and Comparative Examples C4-C7, coating formulations were prepared using the Sol-gel and the copolymers listed in Table 1 below. The Sol-gel was diluted with isopropanol to 13% or 16% solids prior to mixing with the copolymer solutions. The Sol-gel to copolymer ratio was 98.5 : 1.5 for each mixture. The formulations were coated onto either primed PC Film or primed PC Plaque. The PC Film and PC Plaque were primed by applying the Primer with a Number 6 Mayer Rod and allowing to dry for 10 minutes at room temperature. The test formulations were coated on the primer substrates using a Number 6 Mayer Rod. The coated substrate was allowed to stand at room temperature for 10 minutes and then was cured by placing in a 130°C oven for 30 minutes. All coatings appeared optically clear. After standing for 24 hours at room temperature, the coated substrates were tested for lint retention using the Lint Testing Test Method described above. The Average % Haze values are presented in Table 1 below. Some of the samples were measured to determine the contact angle using the test method described above, the data are in Table 2 below. The samples were also tested according to the Ink Repellency Test Method. The results are shown in Table 4 below. Samples were tested for solvent resistance using the Solvent Resistance Test Method listed above, the results are presented in Table 5 below. Samples were tested for durability to cleaning tissues using the Cleaning Tissue Durability Test Method described above, the results are shown in Table 6 below. Samples were tested using the XPS test method presented above, the results are shown in Table 7 below.

**Table 1: Linting Data**

| Example | Sol-gel % Solids | Polymer Added (Example Number) | Substrate | Linting Test (Average % Haze) |
|---|---|---|---|---|
| 4 | 13 | 1 | PC Film | 0.8 |
| 5 | 13 | 2 | PC Film | 0.5 |
| 6 | 13 | 3 | PC Film | 0.6 |
| 7 | 16 | 2 | PC Film | 0.4 |
| 8 | 16 | 3 | PC Film | 0.4 |
| C4 | 13 | none | PC Film | 1.0 |
| C5 | 13 | C1 | PC Film | 30 |
| C6 | 16 | C2 | PC Film | 40 |
| C7 | 13 | C3 | PC Plaque | 37 |

**Table 2: Contact Angle Data**

| Example | Substrate | Water Contact Angle Measurements (static/advancing/retreating) | Oil Contact Angle Measurements (advancing/retreating) |
|---|---|---|---|
| 4 | PC Film | 102/114/77 | 61/50 |
| 5 | PC Film | 103/111/74 | 62/48 |
| 6 | PC Film | 104/112/72 | 63/49 |
| C4 | PC Film | 92/98/76 | 36/30 |
| C5 | PC Film | 105/108/65 | 66/47 |

### Examples 9-10 and Comparative Examples C8-C10

For Examples 9-10 and Comparative Examples C8-C10, coating formulations were prepared using the Sol-gel and the copolymers listed in Table 2 below. The Sol-gel was used at 20% solids or diluted with isopropanol to 16% solids prior to mixing with the copolymer solutions. The Sol-gel to copolymer ratio was 98 : 2 for each mixture. The formulations were coated onto either PMMA Film or PMMA Plaque using a Number 6 Mayer Rod. The coated substrate was allowed to stand at room temperature for 10 minutes and then was cured by placing in a 90°C oven for 1 hour. All coatings appeared optically clear. After standing for 24 hours at room temperature, the coated substrates were tested for lint retention using the Lint Testing Test Method described above. The Average % Haze values are presented in Table 3 below. The samples were also tested according to the Ink Repellency Test Method. The results are shown in Table 4 below. Samples were tested for solvent resistance using the Solvent Resistance Test Method listed above, the results are presented in Table 5 below. Samples were tested for durability to cleaning tissues using the Cleaning Tissue Durability Test Method described above, the results are shown in Table 6 below.

**Table 3: Linting Data**

| Example | Sol-gel % Solids | Polymer Added (Example Number) | Substrate | Linting Test (Average % Haze) |
|---|---|---|---|---|
| 9 | 16 | 3 | PMMA Plaque | 1.0 |
| 10 | 16 | 3 | PMMA Film | 9.0 |
| C8 | 20 | none | PMMA Plaque | 3.0 |
| C9 | 16 | C2 | PMMA Plaque | 42 |
| C10 | 16 | C2 | PMMA Film | 36 |

**Table 4: Ink Repellency Data**

| Example | Polymer Added (Example Number) | Substrate | Ink Repellency Test Rating |
|---|---|---|---|
| 4 | 1 | PC Film | 1 |
| 5 | 2 | PC Film | 1 |
| 6 | 3 | PC Film | 1 |
| 7 | 2 | PC Film | 1 |
| 8 | 3 | PC Film | 1 |
| C4 | none | PC Film | 5 |
| C5 | C1 | PC Film | 1 |
| C6 | C2 | PC Film | 1 |
| 9 | 3 | PMMA Plaque | 1 |
| 10 | 3 | PMMA Film | 1 |
| C7 | none | PC Plaque | 5 |
| C8 | C2 | PMMA Plaque | 2 |
| C9 | C2 | PMMA Plaque | 2 |

**Table 5: Solvent Resistance Data**

| Example | Solvent Used | | | | | | |
|---|---|---|---|---|---|---|---|
| | IPA | Toluene | MIBK | Acetone | EtOAc | MEK | DMF |
| 4 | C/1 | C/1 | C/1 | C/1 | C/1 | C/1 | C/1 |
| 5 | C/1 | C/1 | C/1 | C/1 | C/1 | C/1 | C/1 |
| 6 | C/1 | C/1 | C/1 | C/1 | C/1 | C/1 | C/1 |
| 7 | C/1 | C/1 | C/1 | C/1 | C/1 | C/1 | C/1 |
| 8 | C/1 | C/1 | C/1 | C/1 | C/1 | C/1 | C/1 |
| 9 | C/1 | C/1 | C/1 | C/1 | C/1 | C/1 | C/1 |
| 10 | C/1 | C/1 | C/1 | C/1 | C/1 | C/1 | C/1 |
| C4 | C/5 | C/5 | C/5 | C/5 | C/5 | C/5 | C/5 |
| C6 | C/1 | C/1 | C/1 | C/1 | C/1 | C/1 | C/1 |

**Table 6: Cleaning Tissue Durability Test Data**

| Example | Substrate | Observed Coating Surface Change After Wiping | Ink Repellency Rating |
|---|---|---|---|
| 4 | PC Film | No Change | 1 |
| 5 | PC Film | No Change | 1 |
| 6 | PC Film | No Change | 1 |
| 7 | PC Film | No Change | 1 |
| 8 | PC Film | No Change | 1 |
| 9 | PMMA Plaque | No Change | 1 |
| 10 | PMMA Film | No Change | 1 |
| C4 | PC Film | No Change | 5 |

**Table 7: XPS Data**

| Example | Atomic % Concentration | | | | | | |
|---|---|---|---|---|---|---|---|
| | C | O | Si | F | N | Cl | Na |
| C4 | 33 | 38 | 27 | 0.2 | 0.0 | 0.4 | 0.7 |
| 4 | 29 | 31 | 18 | 21 | 0.5 | 0.0 | 0.3 |
| 7 | 29 | 32 | 18 | 19 | 0.4 | 0.4 | 0.8 |
| 8 | 28 | 33 | 18 | 19 | 0.5 | 0.3 | 0.9 |
| C6 | 35 | 29 | 17 | 15 | 2.8 | 0.0 | 0.6 |

### Examples 11-16 and Comparative Examples C11-C14

A series of coated substrates were prepared by dip coating PC Plaque substrates (10 x 10 centimeters) using the coating formulations shown in Table 8 below. The polymer additives were diluted to 0.5 weight % solutions with methanol before addition to the Sol-gel composition. The coatings were prepared by immersing the substrate in a Primer solution at a rate of 90 centimeters per minute. Once the entire substrate was immersed in the primer, the substrate was removed from the primer at a rate of 90 centimeters per minute and was allowed to air dry at room temperature for 10 minutes. The dried substrate was then immersed into a solution of either Sol-gel ( Comparative Example C11) or a solution of Sol-gel plus additive (Examples 11-16 and Comparative Examples C12-C14), at a rate of 90 centimeters per minute and withdrawn at a rate of 19 centimeters per minute. The coated plaque was air dried at room temperature for 20 minutes and finally heated in a 130°C oven for 30 minutes. The coating quality was noted and the coated substrates were tested for lint retention using the Lint Testing Test Method described above. The Average % Haze values are presented in Table 8 below. The samples were measured to determine the contact angle using the test method described above, the data are in Table 9 below.

**Table 8: Linting Data**

| Example | Polymer Added (Example Number) | Polymer Added Amount | Coating Quality Observed | Linting Test (Average % Haze) |
|---|---|---|---|---|
| | | (wt%) | | |
| 11 | 1 | 0.50 | OK | 5.2 |
| 12 | 1 | 1.00 | Good | 8.5 |
| 13 | 1 | 1.50 | Good | 11.5 |
| 14 | 2 | 1.00 | Good | 7.8 |
| 15 | 2 | 1.50 | Good | 11.3 |
| 16 | 3 | 1.50 | Good | 13.8 |
| C11 | none | 0 | OK | 0.8 |
| C12 | C2 | 0.50 | Poor/Spotty | 17.7 |
| C13 | C2 | 1.00 | Poor/Spotty | 25.6 |
| C14 | C2 | 1.50 | Poor/Spotty | 23.3 |

**Table 9: Contact Angle Data**

| Example | Water Contact Angle Measurements (advancing/retreating/static) | Oil Contact Angle Measurements (advancing/retreating/static) |
|---|---|---|
| 11 | 106/70/103 | 64/50/61 |
| 12 | 106/68/102 | 65/52/61 |
| 13 | 107/68/103 | 69/57/65 |
| 14 | 105/65/96 | 63/46/61 |
| 15 | 106/65/99 | 68/47/63 |
| 16 | 105/68/97 | 65/44/62 |
| C11 | 99/70/91 | 41/28/37 |
| C12 | 104/73/102 | 70/52/64 |
| C13 | 103/68/103 | 71/48/66 |
| C14 | 105/71/104 | 71/53/67 |

### Examples 17-21 and Comparative Examples C15-C16

A series of coated substrates were prepared by dip coating Glass Micro Slide substrates using the coating formulations shown in Table 10 below. For Comparative Example 16, commercially available Coating-1 was used as the coating formulation. The polymer additives were used as 20 weight % solutions, and the Sol-gel composition was diluted to either 5% solids or 10% solids with methanol. The coatings were prepared by immersing the substrate in a Primer solution at a rate of 90 centimeters per minute. Once the entire substrate was immersed in the primer, the substrate was removed from the primer at a rate of 90 centimeters per minute and was allowed to air dry at room temperature for 10 minutes. The dried substrate was then immersed into a solution of a solution of Sol-gel plus additive at a rate of 90 centimeters per minute and withdrawn at a rate of 19 centimeters per minute. The coated Glass Micro Slide was air dried at room temperature for 10 minutes and finally heated in a 130°C oven for 30 minutes. The coated substrates were tested for lint retention using the Lint Testing Test Method described above. The Average % Haze values are presented in Table 10 below. The samples were measured to determine the contact angle using the test method described above, the data are in Table 11 below.

**Table 10: Linting Data**

| Example | Polymer Added (Example Number) | Polymer Added Amount | Linting Test (Average % Haze) |
|---|---|---|---|
| | | (wt%) | |
| 17 | 1 | 1.5 | 38.0 |
| 18 | 2 | 1.8 | 32.9 |
| 19 | 3 | 1.8 | 33.1 |
| C15 | C2 | 2.0 | 43.3 |
| 20 | 2 | 2.0 | 31.6 |
| 21 | 3 | 2.0 | 30.1 |
| C16 | NA | NA | 52.4 |

| | | | |
|---|---|---|---|
| NA = Not applicable | | | |

**Table 11: Contact Angle Data**

| Example | Water Contact Angle Measurements (advancing/retreating/static) | Oil Contact Angle Measurements (advancing/retreating/static) |
|---|---|---|
| 17 | 107/79/99 | 63/52/61 |
| 18 | 113/77/101 | 59/43/61 |
| 19 | 106/94/97 | 63/44/60 |
| C15 | 107/82/97 | 65/55/61 |
| 20 | 112/84/97 | 65/54/62 |
| 21 | 108/83/96 | 65/52/62 |
| C16 | 105/83/104 | 68/49/66 |

### Examples 22-30 and Comparative Examples C17-C20

For Examples 22-30 and Comparative Examples C17-C20, coating formulations were prepared using the Sol-gel and the copolymers listed in Table 12 below. The Sol-gel was used at 20% solids or diluted with isopropanol to 16% solids prior to mixing with the copolymer solutions. The Sol-gel to copolymer ratio is shown in Table 12. The formulations were coated onto PC Plaque using a Number 6 Mayer Rod. The coated substrate was allowed to stand at room temperature for 10 minutes and then was cured by placing in a 90°C oven for 1 hour. All coatings appeared optically clear. After standing for 24 hours at room temperature, the coated substrates were tested for hardness using the Hardness Test Method described above.

**Table 12: Hardness data**

| Example | Polymer Added (Example Number) | Polymer Added Amount | Hardness |
|---|---|---|---|
| | | (wt%) | (GPa) |
| C17 | None | ---- | 4.999 |
| C18 | C2 | 0.50 | 4.649 |
| C19 | C2 | 1.00 | 4.392 |
| C20 | C2 | 1.50 | 4.469 |
| 22 | 1 | 0.50 | 4.235 |
| 23 | 1 | 1.00 | 4.839 |
| 24 | 1 | 1.50 | 4.860 |
| 25 | 2 | 0.50 | 4.961 |
| 26 | 2 | 1.00 | 4.575 |
| 27 | 2 | 1.50 | 4.992 |
| 28 | 3 | 0.50 | 4.731 |
| 29 | 3 | 1.00 | 4.857 |
| 30 | 3 | 1.50 | 4.658 |

## Claims

1. A composition comprising:
a copolymer prepared from a reaction mixture comprising:
an ethylenically unsaturated hydrolysable silane;
an ethylenically unsaturated polyoxyalkylene;
an ethylenically unsaturated fluorinated polyether; and
an initiator.

2. The composition of claim 1 wherein the ethylenically unsaturated fluorinated polyether comprises highly fluorinated or perfluoro polyether groups comprising the formula:
F(R^{f}O)ₓR^{f}-.wherein each R^{f} is independently a linear, branched, cyclic or acyclic highly fluorinated or perfluorinated alkylene group having from 1 to 6 carbon atoms, and x is an integer of 2 or greater.

3. The composition of claim 1 wherein the ethylenically unsaturated fluorinated polyether comprises perfluoro polyether groups comprising the formula:
F(CF(CF₃)CF₂O)ᵤCF(CF₃)-, wherein u is a number in the range of 3-50.

4. The composition of claim 1 wherein the ethylenically unsaturated hydrolysable silane, the ethylenically unsaturated polyoxyalkylene, and the ethylenically unsaturated fluorinated polyether comprise (meth)acrylates.

5. The composition of claim 1 wherein the ethylenically unsaturated polyoxyalkylene comprises polyoxyalkylene groups comprising the formula: -((CH₂)ₙCHRO)ₘ-, wherein R is H or -CH₃, n is an integer of from 1 to 3 and m is an integer from 3 to about 5,000.

6. The composition of claim 1 further comprising a curable sol-gel dispersion, wherein the curable sol-gel dispersion comprises 90 to 99.9 % by weight of the composition, based on the total solids in the composition.

7. An article comprising:
a substrate; and
a cured coating on at least one surface of the substrate, wherein the cured coating comprises a cured composition comprising:
a curable sol-gel dispersion; and
a copolymer prepared from a reaction mixture comprising:
an ethylenically unsaturated hydrolysable silane;
an ethylenically unsaturated polyoxyalkylene;
an ethylenically unsaturated fluorinated polyether; and
an initiator.

8. The article of claim 7 wherein the substrate comprises polycarbonate, polyethylene terephthalate, polymethylmethacrylate, ceramic, glass, stone, wood, fibers, or metal.

9. The article of claim 7 wherein the surface layer exhibits ink repellancy.

10. The article of claim 9 wherein the surface layer exhibits a cellulose surface attraction of less than 10%.

## Patentansprüche

1. Zusammensetzung, umfassend:
ein Copolymer, hergestellt aus einer Reaktionsmischung, umfassend:
ein ethylenisch ungesättigtes hydrolysierbares Silan;
ein ethylenisch ungesättigtes Polyoxalkylen;
einen ethylenisch ungesättigten fluorierten Polyether und
einen Initiator.

2. Zusammensetzung nach Anspruch 1, wobei der ethylenisch ungesättigte fluorierte Polyether hochfluorierte oder perfluorierte Polyethergruppen umfasst, die die Formel F(R^{f}O)ₓR^{f}- umfassen, wobei R^{f} jeweils unabhängig voneinander für eine lineare, verzweigte, cyclische oder acyclische hochfluorierte oder perfluorierte Alkylengruppe mit 1 bis 6 Kohlenstoffatomen steht und x für eine ganze Zahl mit einem Wert von 2 oder mehr steht.

3. Zusammensetzung nach Anspruch 1, wobei der ethylenisch ungesättigte fluorierte Polyether perfluorierte Polyethergruppen umfasst, die die Formel F(CF(CF₃)CF₂O)ᵤCF(CF₃)- umfassen, wobei u für eine Zahl im Bereich von 3-50 steht.

4. Zusammensetzung nach Anspruch 1, wobei das ethylenisch ungesättigte hydrolysierbare Silan, das ethylenisch ungesättigte Polyoxyalkylen und der ethylenisch ungesättigte fluorierte Polyether (Meth)acrylate umfassen.

5. Zusammensetzung nach Anspruch 1, wobei das ethylenisch ungesättigte Polyoxyalkylen Polyoxyalkylengruppen umfasst, die die Formel -((CH₂)ₙCHRO)ₘ- umfassen, wobei R für H oder -CH₃ steht, n für eine ganze Zahl von 1 bis 3 steht und m für eine ganze Zahl von 3 bis etwa 5000 steht.

6. Zusammensetzung nach Anspruch 1, ferner umfassend eine härtbare Sol-Gel-Dispersion, wobei die härtbare Sol-Gel-Dispersion 90 bis 99,9 Gew.-% der Zusammensetzung, bezogen auf die gesamten Feststoffe in der Zusammensetzung, umfasst.

7. Gegenstand, umfassend:
ein Substrat und
eine gehärtete Beschichtung auf mindestens einer Oberfläche des Substrats,
wobei die gehärtete Beschichtung eine gehärtete Zusammensetzung, umfassend:
eine härtbare Sol-Gel-Dispersion und
ein Copolymer, hergestellt aus einer Reaktionsmischung, umfassend:
ein ethylenisch ungesättigtes hydrolysierbares Silan;
ein ethylenisch ungesättigtes Polyoxyalkylen;
einen ethylenisch ungesättigten fluorierten Polyether und
einen Initiator;
umfasst.

8. Gegenstand nach Anspruch 7, wobei das Substrat Polycarbonat, Polyethylenterephthalat, Polymethylmethacrylat, Keramik, Glas, Stein, Holz, Fasern oder Metall umfasst.

9. Gegenstand nach Anspruch 7, wobei die Oberflächenschicht Tintenabweisungsvermögen aufweist.

10. Gegenstand nach Anspruch 9, wobei die Oberflächenschicht eine Celluloseoberflächenanziehung von weniger als 10% aufweist.

## Revendications

1. Composition comprenant :
un copolymère préparé à partir d'un mélange réactionnel comprenant :
un silane hydrolysable à insaturation éthylénique ;
un polyoxyalkylène à insaturation éthylénique ;
un polyéther fluoré à insaturation éthylénique ; et
un initiateur.

2. Composition selon la revendication 1, dans laquelle le polyéther fluoré à insaturation éthylénique comprend des groupes polyéther hautement fluorés ou perfluoro-polyéther ayant la formule F(R^{f}O)ₓR^{f}-, dans laquelle chaque groupe R^{f} est indépendamment un groupe alkylène linéaire, ramifié, cyclique ou acyclique hautement fluoré ou perfluoré contenant de 1 à 6 atomes de carbone, et x est un nombre entier valant 2 ou plus.

3. Composition selon la revendication 1, dans laquelle le polyéther fluoré à insaturation éthylénique comprend des groupes perfluoro-polyéther ayant la formule F(CF(CF₃)CF₂O)ᵤCF(CF₃)-, dans laquelle u est un nombre valant de 3 à 50.

4. Composition selon la revendication 1, dans laquelle le silane hydrolysable à insaturation éthylénique, le polyoxyalkylène à insaturation éthylénique, et le polyéther fluoré à insaturation éthylénique comprennent des (méth)acrylates.

5. Composition selon la revendication 1, dans laquelle le polyoxyalkylène à insaturation éthylénique comprend des groupes polyoxyalkylène ayant la formule -((CH₂)ₙCHRO)ₘ-, dans laquelle R est un atome d'hydrogène ou un groupe -CH₃, n est un nombre entier valant de 1 à 3 et m est un nombre entier valant de 3 à environ 5 000.

6. Composition selon la revendication 1, comprenant en outre une dispersion sol-gel durcissable, la dispersion sol-gel durcissable constituant de 90 à 99,9 % en poids de la composition, relativement à la teneur totale en solides de la composition.

7. Article comprenant :
un substrat ; et
un revêtement durci sur au moins une surface du substrat, le revêtement durci contenant une composition durcie comprenant :
une dispersion sol-gel durcissable ; et
un copolymère préparé à partir d'un mélange réactionnel comprenant :
un silane hydrolysable à insaturation éthylénique ;
un polyoxyalkylène à insaturation éthylénique ;
un polyéther fluoré à insaturation éthylénique ; et
un initiateur.

8. Article selon la revendication 7, dans lequel le substrat comprend un polycarbonate, du téréphtalate de polyéthylène, du polyméthacrylate de méthyle, une céramique, du verre, de la pierre, du bois, des fibres, ou du métal.

9. Article selon la revendication 7, dans lequel la couche de surface repousse l'encre.

10. Article selon la revendication 9, dans lequel la couche de surface présente une attraction superficielle de la cellulose qui est inférieure à 10 %.
